# EUROPEAN PATENT APPLICATION

(11) **EP 2 403 254 A1**
(43) Date of publication of application: **04.01.2012**
(21) Application number: 11158130.2
(22) Date of filing: 14.03.2011
(51) Int. Cl.: H04N 13/00

(54) **Image processing apparatus, image processing program, and image processing method**

(30) Priority: 30.06.2010 JP 2010150036
(71) Applicant: Kabushiki Kaisha Toshiba, Tokyo 105-8001 (JP)
(72) Inventor: Shimaya, Tomoyuki, Tokyo 105-8001 (JP); Kaihotsu, Takahisa, Tokyo 105-8001 (JP)
(74) Representative: Henkel, Breuer & Partner

(57) **Abstract**

According to one embodiment, an image processing apparatus includes a receiver (101) configured to receive a content including a first image and a second image that have a parallax with respect to the first image, a caption detection module (155) configured to detect a caption from the content received by the receiver, a calculation module (156) configured to detect objects common to the first image and the second image and to calculate a parallax between the objects detected, and a caption data output module (150) configured to output the parallax calculated by the calculation module, as reference parallax to control displaying of the caption detected by the caption detection module.

## Description

Embodiment described herein relate generally to an image processing apparatus, an image processing program, and an image processing method.

In recent years, three-dimensional display apparatuses have been put to practical use, which can make viewers to perceive two-dimensional images as three-dimensional images. The three-dimensional display apparatus displays two identical secondary images, one perceivable to the left eye only and the other perceivable to the right eye only. The user sees the right-eye image and left-eye image with his or her right eye and left eye, respectively, perceiving a three-dimensional image.

Also in recent years, contents to display the three-dimensional images by the three-dimensional display apparatus are increasing. Moreover, there are contents that display three-dimensional images, and the contents that have the captions embedded in the image exist. Moreover, there are contents that have the caption data to display the caption on the screen by the On Screen Display (OSD) processing further for instance.

When the three-dimensional display apparatus displays a three-dimensional image, an object (e.g., person, building or any other object) and the caption the user perceives in the image may differ from each other in terms of depth. Because of this difference, the user may feel something strange with the three-dimensional image he or she is viewing.

A general architecture that implements the various features of the embodiments will now be described with reference to the drawings. The drawings and the associated descriptions are provided to illustrate the embodiments and not to limit the scope of the invention.
FIG. 1 is an exemplary view showing for explaining an image processing apparatus according to an embodiment.
FIG. 2 is an exemplary view showing for explaining the control module shown in FIG. 1 according to an embodiment.
FIG. 3 is an exemplary view showing for explaining a process performed in the image processing apparatus according to an embodiment.
FIG. 4 is an exemplary view showing for explaining a process performed in the image processing apparatus according to an embodiment.
FIG. 5 is an exemplary view showing for explaining a process performed in the image processing apparatus according to an embodiment.
FIG. 6 is an exemplary view showing for explaining a process performed in the image processing apparatus according to an embodiment.
FIG. 7 is an exemplary view showing for explaining a process performed in the image processing apparatus according to an embodiment.
FIG. 8 is an exemplary view showing for explaining a process performed in the image processing apparatus according to an embodiment.

Various embodiments will be described hereinafter with reference to the accompanying drawings. In general, according to one embodiment, an image processing apparatus comprises: a receiver configured to receive a content including a first image and a second image that have a parallax with respect to the first image; a caption detection module configured to detect a caption from the content received by the receiver; a calculation module configured to detect objects common to the first image and the second image and to calculate a parallax between the objects detected; and a caption data output module configured to output the parallax calculated by the calculation module, as reference parallax to control displaying of the caption detected by the caption detection module.

An image processing apparatus, an image processing program and an image processing method will be described below in detail.

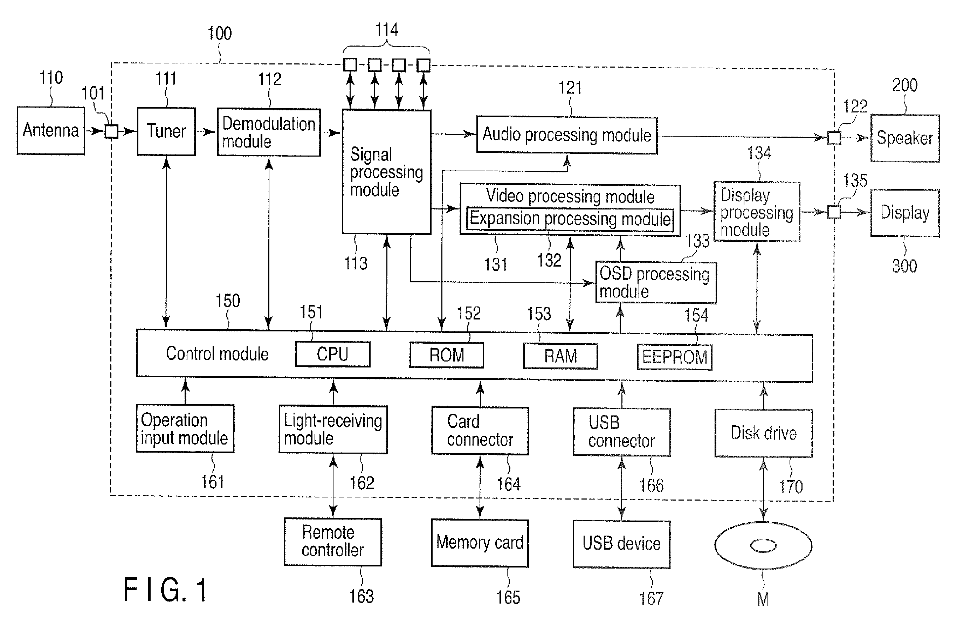

FIG. 1 is a diagram showing a configuration of an image processing apparatus according to an embodiment.

The image processing apparatus 100 according to this embodiment will be described as an apparatus that is designed to process content for displaying a three-dimensional image.

The content for displaying a three-dimensional image has at least a left-eye image and a right-eye image, which the user may see with the left eye and the right eye, respectively. The content may be of, for example, side-by-side type, line-by-line type, frame-sequential type, above-below type, checkerboard type, LR independent type or circularly polarized type. Nonetheless, the image processing apparatus 100 according to this embodiment can process any content that has at least two secondary images, i.e., left-eye image and right-eye image for the left eye and right eye, respectively.

The image processing apparatus 100 comprises a broadcast input terminal 101, a tuner 111, a demodulation module 112, a signal processing module 113, a communication interface 114, an audio processing module 121, an audio output terminal 122, a video processing module 131, an OSD processing module 133, a display processing module 134, a video output terminal 135, a control module 150, a operation input module 161, a light-receiving module 162, a card connector 164, a USB connector 166, and a disk drive 170.

The broadcast input terminal 101 is the input terminal that receives digital broadcast signals received by an antenna 110. The antenna 110 receives, for example, terrestrial digital broadcast signals, broadcasting satellite (BS) digital broadcast signals, and/or 100-dgree communication satellite (CS) digital broadcast signals. That is, the antenna 110 receives content, such as programs distributed in the form of broadcast signals.

The broadcast input terminal 101 supplies the digital broadcast signal it has received, to the tuner 111 configured to process digital broadcast signals. The tuner 111 performs a tuning process, thereby selecting one of the digital signals supplied from the antenna 110 (or selecting a broadcasting station). The digital signal thus selected is transmitted to the demodulation module 112.

The demodulation module 112 demodulates the digital broadcast signal it has received. The digital broadcast signal demodulated (content) is input to the signal processing module 113. Thus, the antenna 110, tuner 111 and demodulation module 112 cooperate to function as a receiver for receiving content.

The signal processing module 113 functions as a module that performs signal processing on digital broadcast content (i.e., moving picture content data). That is, the signal processing module 113 performs a signal process on the digital broadcast signal supplied from the demodulation module 112. More precisely, the signal processing module 113 splits the digital broadcast signal into a video signal, an audio signal and a data signal. The audio signal is supplied to the audio processing module 121. The video signal is supplied to the video processing module 131. The data signal is supplied to the control module 150 and/or the OSD processing module 133.

The communication interface 114 is, for example, an interface capable of receiving content, such as a High Definition Multimedia Interface (HDMI, registered trademark) terminal. The communication interface 114 receives a content in which a digital video signal, a digital audio signal, etc. are multiplexed, from an external apparatus. The communication interface 114 supplies the content to the signal processing module 113. Thus, the communication interface 114 works as a module for receiving content.

The signal processing module 113 processes the signal received from the communication interface 114. For example, the signal processing module 113 splits a digital signal into a digital video signal, a digital audio signal and a data signal. The digital audio signal is supplied to the audio processing module 121. The digital video signal is supplied to the video processing module 131. Further, the signal processing module 113 supplies the data signal to the control module 150 and/or the OSD processing module 133.

Thus, a content having at least left-eye image and right-eye image is input to the signal processing module 113. The signal processing module 113 selects the content input to the communication interface 114 or the content input to the broadcast input terminal 101, and processes the content selected. In other words, the signal processing module 113 splits either a digital broadcast signal or a digital signal.

The audio processing module 121 receives the audio signal from the signal processing module 113 and converts the same to an audio signal of such a format that a speaker 200 can reproduce sound. The audio processing module 121 outputs the audio signal to the audio output terminal 122, which outputs the audio signal to the speaker 200 connected to the audio output terminal 122. The speaker 200 generates sound from the audio signal.

The video processing module 131 receives the video signal from the signal processing module 113 and converts the same to a video signal of such a format that a display 300 can reproduce an image. More specifically, the signal processing module 113 decodes the video signal received from the signal processing module 113, to a video signal from which the display 300 can generate an image. Further, the video processing module 131 superimposes the video signal on an OSD signal supplied from the OSD processing module 133. The video processing module 131 outputs the video signal to the display processing module 134.

In accordance with a data signal supplied from the signal processing module 113 and/or a control signal supplied from the control module 150, the OSD processing module 133 generates an OSD signal on which a graphical user interface (GUI) image, a caption, time or other data item will be superimposed.

The video processing module 131 comprises an expansion processing unit 132. The expansion processing unit 132 processes a video signal, expanding the image represented by the video signal. In response to a control signal coming from the control module 150, the expansion processing unit 132 decides that part of the image which should be expanded. The expansion processing unit 132 then expands the part of the image, in response to another control signal coming from the control module 150.

Controlled by the control module 150, the display processing module 134 performs an image-quality adjustment process on the video signal it has received, adjusting the color, brightness, sharpness, contrast and some other image qualities. The video signal so adjusted is output to the video output terminal 135. The display 300, which is connected to the video output terminal 135, displays the image represented by the video signal adjusted by the display processing module 134.

The display 300 is a display module having, for example, a liquid crystal display, an organic electroluminescent display, or any other display that can display an image represented by a video signal. The display 300 displays the image represented by the video signal supplied to it.

The image processing apparatus 100 may incorporate the display 300. In this case, the apparatus 100 does not have the video output terminal 135. Moreover, the image processing apparatus 100 may incorporate the speaker 200, instead of the audio output terminal 122.

The control module 150 functions as a control module that controls the other components of the image processing apparatus 100. The control module 150 comprises a CPU 151, a ROM 152, a RAM 153, and an EEPROM. The control module 150 performs various processes In accordance with operating signals coming from the operation input module 161.

The CPU 151 has operation elements that perform various operations. The CPU 151 executes the programs stored in the ROM 152 or the EEPROM 154, implementing various functions.

The ROM 152 stores programs for controlling the components of the apparatus 100, other than the control module 150. The CPU 151 activates the programs stored in the ROM 151, in response to the operating signals supplied from the operation input module 161. Thus, the control module 150 controls the other components of the image processing apparatus 100.

The RAM 153 works as work memory for the CPU 151. That is, the RAM 153 stores the data processed by, and read from, the CPU 151.

The EEPROM 154 is a nonvolatile memory storing various setting data items and various programs.

The operation input module 161 is an input module that has keys, a keyboard, a mouse, a touch panel, or any other input device that can generate operating signals when operated. The operation input module 161 generates operating signals when operated by the user. The operating signals generated are supplied to the control module 150.

The touch panel includes an electrostatic sensor, a thermo sensor or a sensor of any other type that generates a position signal. If the image processing apparatus 100 incorporates the display 300, the operation input module 161 may have a touch panel formed integral with the display 300.

The light-receiving module 162 has, for example, a sensor that receives operating signals coming from a remote controller 163. The light-receiving module 162 supplies the operating signals to the control module 150. The remote controller 163 generates operating signals as it is operated by the user. The operating signals thus generated are supplied to the light-receiving module 162 by means of infrared-ray communication. The light-receiving module 162 and the remote controller 163 may be configured to exchange operating signals, by using other wireless communication such as radio communication.

The card connector 164 is an interface configured to perform communication with, for example, a memory card 165 that stores moving-picture content. The card connector 164 reads the moving picture content from the memory card 165 and supplies the content to the control module 150.

The USB connector 166 is an interface that performs communication with an USB device 167. The USB connector 166 receives signals from the USB device 167 and supplies the signals to the control module 150.

If the USB device 167 is an input device such as a keyboard, the USB connector 166 receives operating signals from the USB device 167. The USB connector 166 supplies the operating signals it has received, to the control module 150. In this case, the control module 150 performs various processes in accordance with the operating signals supplied from the USB connector 166.

The USB device 167 may be a storage device that stores moving picture content. In this case, the USB connector 166 can acquire the content from the USB device 167. The USB connector 166 supplies the content it has received, to the control module 150.

The disk drive 170 is a drive that can hold an optical disk M in which moving picture content can be recorded, such as a Compact Disk (CD), Digital Versatile Disk (DVD), Blu-ray disk (BD) or any other optical disk. The disk drive 170 reads the content from the optical disk M and supplies the content to the control module 150.

The image processing apparatus 100 further comprises a power supply module (not shown). The power supply module supplies power to the other components of the image processing apparatus 100. The power supply module receives power through, for example, an AC adaptor, and converts the power and supplies the same to the other components of the apparatus 100. The power supply module may have a battery. In this case, the battery is recharged with the power supplied through the AC adaptor. The power supply module supplies the power from the battery to the other components of the image processing apparatus 100.

The image processing apparatus 100 may comprise another interface, such as a serial-ATA or LAN port. The image processing apparatus 100 can acquire the content recorded in the device connected to the interface and can reproduce the content. The image processing apparatus 100 can also output the audio signal and video signal, thus reproduced, to any device that is connected to the interface.

The image processing apparatus 100 may be connected by an interface to a network. Then, the apparatus 100 can acquire and reproduce any moving picture content data available on the network.

Moreover, the image processing apparatus 100 may further comprise a storage device such as a hard disk drive (HDD), a solid-state disk (SSD) or a semiconductor memory. If this storage device stores moving picture content, the image processing apparatus 100 can read and reproduce this content. Further, the image processing apparatus 100 can store broadcast signals or content supplied through networks.

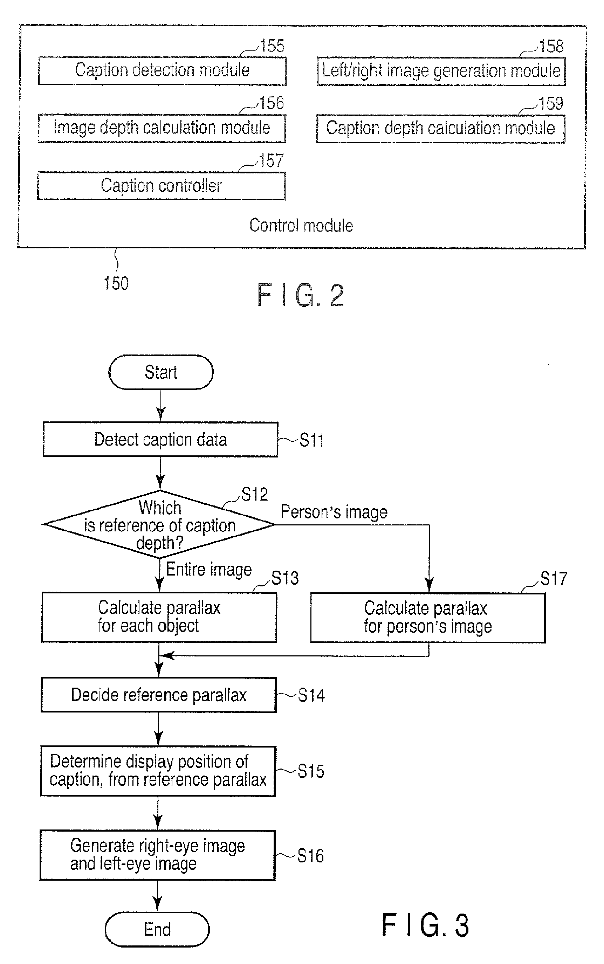

FIG. 2 is a diagram showing an exemplary configuration of the control module 150 shown in FIG. 1.

As shown in FIG. 2, the control module 150 comprises a caption detection module 155, an image depth calculation module 156, a caption controller 157, a left/right image generation module 158, and a caption depth calculation module 159.

The caption detection module 155 detects the captions contained in the moving picture content supplied to the signal processing module 113. More specifically, the caption detection module 155 detects, from the content, a caption data packet holding captions as data. If the content contains the caption data, the image processing apparatus 100 generates an OSD signal on which the caption will be superimposed by the OSD processing module 133.

The image depth calculation module 156 detects objects existing in the video signal of the content and calculates the depths of the respective objects. The objects the module 156 detects are, for example, persons, buildings and other objects, all existing in the video signal decoded by the video processing module 131. For example, the objects the module 156 detects objects common to the left-eye image and the right-eye image.

The image depth calculation module 156 also detects the depth of each object detected. To be more specific, the image depth calculation module 156 detects the distance the user perceives as depth, for each object, from the parallax that exists between the left-eye image and the right-eye image. More precisely, the image depth calculation module 156 calculates the parallax for each object existing in the left-eye image and the parallax for the identical object existing in the right-eye image. In other words, the image depth calculation module 156 calculates the parallax of any object common to the left-eye image and the right-eye image. The parallax is the distance between the position an object assumes in the left-eye image and the position the identical object assumes in the right-eye image, as measured along the horizontal line of the left-eye and right-eye images.

The caption controller 157 determines the position any caption assumes at last in the depth direction. The caption controller 157 calculates a reference parallax from the left-eye image and right-eye image represented by the video signal decoded by the video processing module 131. The reference parallax will be used to determine the position at which the caption the caption detection module 155 has detected will be displayed.

That is, if the content includes a caption data packet, the caption controller 157 determines the position the caption assumes at last in the depth direction, from the depth of the object, which has been calculated by the image depth calculation module 156. More specifically, the caption controller 157 determines the positions the caption takes in the left-eye image and right-eye image, respectively, from the parallax of the identical objects existing in the left-eye image and right-eye image.

The left/right image generation module 158 outputs the positions determined by the module 157, i.e., the position the caption takes in the left-eye image and right-eye image. The positions are supplied to the OSD processing module 133. The OSD processing module 133 generates a right-eye OSD signal to be superimposed on the right-eye image, from the caption data packet, the character data stored beforehand, and the position the caption assumes in the right-eye image. The OSD processing module 133 also generates a left-eye OSD signal to be superimposed on the left-eye image, from the caption data packet, the character data stored beforehand, and the position the caption assumes in the left-eye image.

The OSD processing module 133 supplies the right-eye OSD signal and the left-eye OSD signal to the video processing module 131. The video processing module 131 superimposes the right-eye OSD signal supplied from the OSD processing module 133, on the right-eye image. The video processing module 131 also superimposes the left-eye OSD signal supplied from the OSD processing module 133, on the left-eye image. That is, the OSD processing module 133 controls the content so that the caption may be displayed at a decided position in the right-eye image and at a decided position in the left-eye image.

The processing described above can generate a video signal for displaying a caption the user can perceive as three-dimensional image.

The caption detection module 155 detects the caption contained in the video signal of the content. More precisely, the caption detection module 155 performs, for example, a character recognition process, such as pattern matching, thereby detecting the characters contained in the video signal. The caption detection module 155 may be configured to detect a character string, from the positions of the adjacent characters detected.

Moreover, the caption detection module 155 decides a region of the image, in which characters are displayed. The caption detection module 155 may be configured to detect characters by any method that can detect characters.

The caption depth calculation module 159 calculates the depth of any caption contained in the video signal of the content. That is, the caption depth calculation module 159 calculates the depth of the caption detected by the caption detection module 155, from the parallax existing between the left-eye image and the right-eye image. To be more specific, the caption depth calculation module 159 calculates the parallax between the two identical captions existing in the left-eye image and right-eye image, respectively.

If the video signal contains a caption, the caption controller 157 determines the position the caption assumes at last in the depth direction, from the depth of the object, which has been calculated by the image depth calculation module 156, and the depth of the caption, which has been calculated by the caption depth calculation module 159. More specifically, the caption controller 157 determines the positions and shapes the caption assumes in the left-eye image and right-eye image, respectively, from the parallax of the identical captions existing in the left-eye image and right-eye image, respectively.

The left/right image generation module 158 outputs the positions and shapes of the captions in the left-eye image and right-eye image, thus determined, to the video processing module 131. In the video processing module 131, the expansion processing unit 132 expands the left-eye image and the right-eye image, both supplied from the left/right image generation module 158, in accordance with the positions and shapes the captions in the left-eye image and right-eye image, all supplied from the left/right image generation module 158.

That is, the expansion processing unit 132 first decides that part of the left-eye image, which should be expanded, in accordance with the position at which the caption is displayed in the left-eye image. Then, the expansion processing unit 132 expands the part so decided, in accordance with the shape of the caption in the left-eye image supplied from the left/right image generation module 158.

The expansion processing unit 132 further decides that part of the left-eye image, which should be expanded, from the position at which the caption is displayed in the right-eye image. Then, the expansion processing unit 132 expands the part so decided, in accordance with the shape of the caption in the right-eye image supplied from the left/right image generation module 158.

The processing described above can generate a video signal for displaying a caption the user can perceive as three-dimensional image.

FIG. 3 is a flowchart showing the process the control module 150 performs in the image processing apparatus 100 of FIG. 1.

If the signal processing module 113 receives content, the control module 150 detects, in Step S11, any caption contained in the video signal of the content. More precisely, the control module 150 detects either the caption contained in the video signal or the caption packet added to the content. Here, assume that the control module 150 has detects the caption packet added to the content.

In Step S12, the control unit 150 determines a reference depth for the caption on the basis of the value stored beforehand.

From the operating signals, the control module 150 generates setting data representing whether the object that should be displayed at the depth of the caption generated by the OSD process is a person's image or the entire image. The setting data, thus generated, is stored in, for example, EEPROM 154.

The control module 150 may be configured to generate setting data items, each for one content type or one genre. If so, the control module 150 decides the genre of the content supplied to the signal processing module 113, on the basis of attribute data, etc. The control module 150 reads the setting data item associated with the genre decided, from the EEPROM 154, and determines the object to display at the depth of the caption, from the setting data item read from the EEPROM 154.

If the object to display at the depth of the caption is the entire image, the control module 150 detects at least one object contained in the video signal decoded by the video processing module 131. In Step S13, the control module 150 then calculates the parallax for each object detected.

In Step S14, the control module 150 decides, on the basis of the parallax calculated, a parallax (reference parallax) for the two captions that should be interposed, respectively in the right-eye image (first image) and left-eye image (second image) generated in the OSD process.

In this case, the control module 150 utilizes the average of the parallaxes calculated for the objects, as reference parallax for the captions. Nonetheless, the control module 150 can sets the reference parallax for the captions to any value within the range for each object. For example, the control module 150 may use the maximum parallax for each object as the reference parallax for the captions. Alternatively, the control module 150 may use the minimum parallax for each object as the reference parallax for the captions.

In Step S15, the control module 150 determines the position the caption assumes at last. To be more specific, the control module 150 determines the positions the caption assumes in the right-eye image and left-eye image, from the reference parallax thus decided.

In Step S16, the control module 150 controls the OSD processing module 133, thereby superimposing the caption on the right-eye image and left-eye image. That is, the control module 150 controls the video processing module 131 and the OSD processing module 133 so that the parallax existing between the left-eye image and the right-eye image may equals the reference parallax decided in Step S14.

Assume that in Step S12, the control unit 150 determines that the object to be displayed at the depth of the caption is a person's image. Then, the control module 150 detects a person's image as object, on the basis of the video signal decoded by the video processing module 131. Then, in Step S17, the control module 150 calculates the parallax for each object.

If a plurality of person's images (objects) exist in the video signal, the control module 150 will calculate the parallax for the person who is talking, or the control module 150 will calculate the parallax for the person located nearest the center of the image.

The control module 150 decides the reference parallax for the captions that should be superimposed on the right-eye image and left-eye images, respectively, in accordance with the parallax calculated in Step S17.

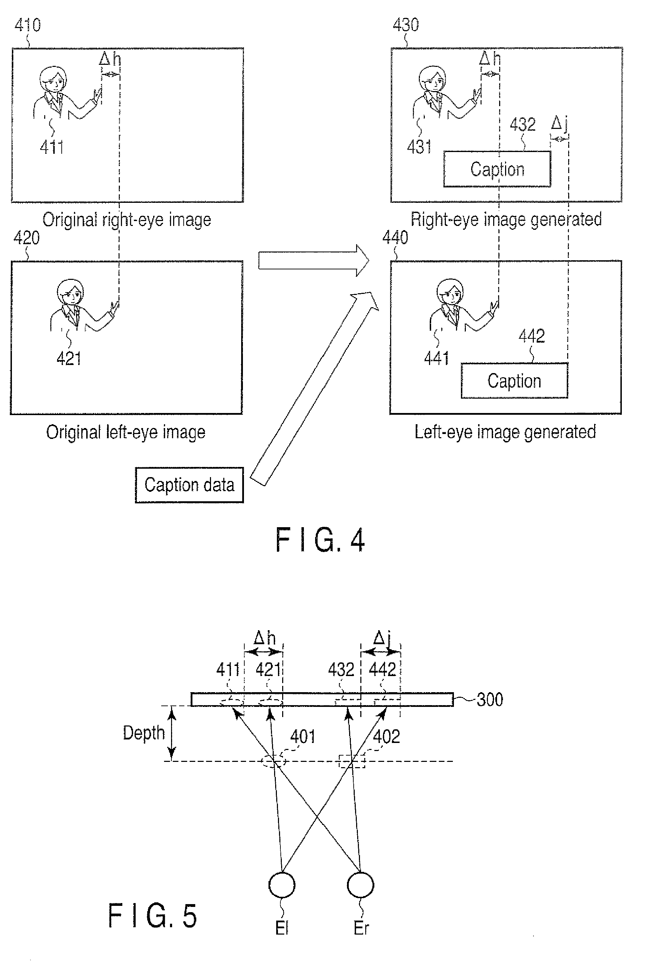

For example, in order to superimpose identical captions on such right-eye image 410 and left-eye image 420 as shown in FIG. 4, the control module 150 detects objects 411 and 421, i.e., identical person's images included in the right-eye image and left-eye image, respectively. Then, the control module 150 calculates parallax Δh from objects 411 and 421 detected, i.e., person's images.

To adjust the depth of the caption to that of the person's images, the control module 150 decides the parallax Δh as reference parallax. In this case, the control module 150 controls the video processing module 131 and the OSD processing module 133, causing them to generate such right-eye image 430 and left-eye image 440 as shown in FIG. 4.

More precisely, the control module 150 generates such captions 432 and 442 that parallax Δj between the captions 432 and 442 in the right-eye image 430 and left-eye image 440, respectively, equals parallax Δh between the captions 431 and 440 in the right-eye image 430 and left-eye image 440, respectively.

Performing the processing described above, the image processing apparatus 100 can display such a three-dimensional image of object 401 as shown in FIG. 5, at the point where the line connecting the user's right eye Er and object 411 in the right-eye image intersects with the line connecting the user's left eye El and object 421 in the left-eye image. Further, the image processing apparatus 100 can display such a three-dimensional image of object 402 as shown in FIG. 5, at the point where the line connecting the user's right eye Er and object 432 in the right-eye image intersects with the line connecting the user's left eye El and object 442 in the left-eye image.

As indicated above, the image processing apparatus 100 can display the reference object 401 and the caption 402 at the same depth, because the parallax Δj of the caption is adjusted to the parallax Δh of the reference object (i.e., reference parallax). In addition, the image processing apparatus 100 can determine the depth of the caption from the depth of another object which may exist in the image.

The image processing apparatus 100 therefore displays the caption at a depth not so much different from the depth of any other object displayed in the same image. This prevents the user from feeling anything strange with the three-three-dimensional image displayed. As a result, the embodiment can provide an image processing apparatus, an image processing program and an image processing method, which are all convenient to the user.

A caption may be embedded as an image in a three-dimensional image, as will be explained below.

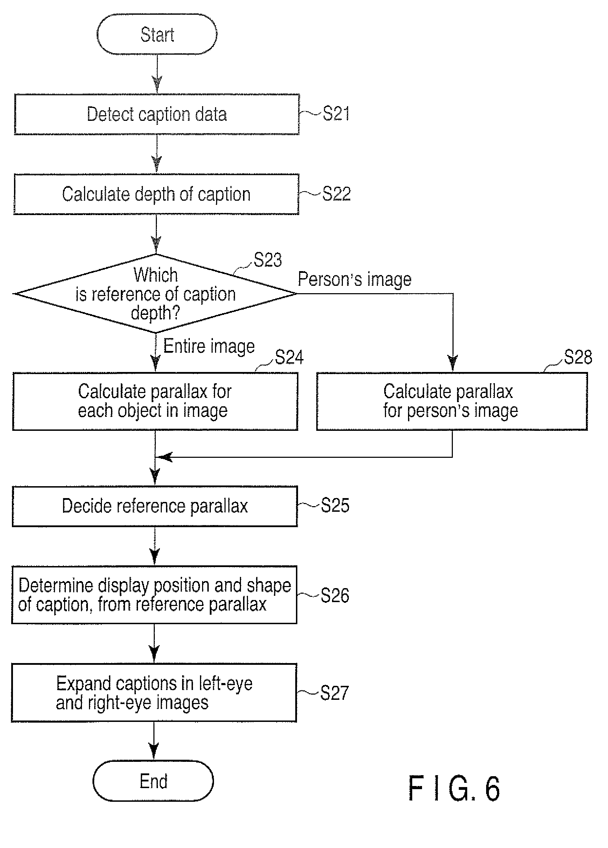

FIG. 6 is a flowchart showing the processing that the control module 150 shown in FIG. 1 performs in this embodiment.

If content is supplied to the signal processing module 113, the control module 150 detects caption data in Step S21. That is, the control module 150 detects the caption contained in a video signal or a caption data packet added to the content. Assume that the control module 150 has detects the caption packet added to the content.

In Step S22, the control unit 150 calculates the depth of the caption embedded in the video signal of the content. To be more specific, the control module 150 calculates the parallax between the identical captions in the left-eye image and right-eye image, respectively.

In Step S23, the control unit 150 determines a reference depth for the caption on the basis of the value stored beforehand.

If the object to display at the depth of the caption is the entire image, the control module 150 detects at least one object contained in the video signal decoded by the video processing module 131. In Step S24, the control module 150 then calculates the parallax for each object detected.

In Step S25, the control module 150 decides, on the basis of the parallax calculated, reference parallax for the two captions that should be interposed.

In Step S26, the control unit 150 determines the position and shape the captions assume at last in the depth direction, from the reference parallax thus decided. That is, the control module 150 determines the position and shape the caption assumes in the left-eye image and the position and shape the caption assumes in the right-eye image, on the basis of the reference parallax decided for the caption.

In Step S27, the control module 150 then controls the video processing module 131 and the expansion processing unit 132 in accordance with the position and shape determined in Step S26 for the caption, thereby expanding those parts of the left-eye image and right-eye image, which include the caption. That is, the control unit 150 causes the expansion processing unit 132 to expand the images of those parts of the left-eye image and right-eye image, which include the caption, if the parallax between the captions in the left-eye image and right-eye image, respectively, is equal to the reference parallax determined in Step S25.

If the object to display at the depth of the caption is found to be a person's image in Step S23, the control module 150 detects the object, i.e., person's image, on the basis of the video signal decoded by the video processing module 131. In Step S28, the control module 150 calculates the parallax for each object detected.

If a plurality of person's images (objects) exist in the video signal, the control module 150 calculates the parallax for the person who is talking. Alternatively, the control module 150 calculates the parallax for the person who is the nearest the center of the image.

In Step S28, the control module 150 decides the reference parallax for the captions, in accordance with the parallax calculated in Step S28.

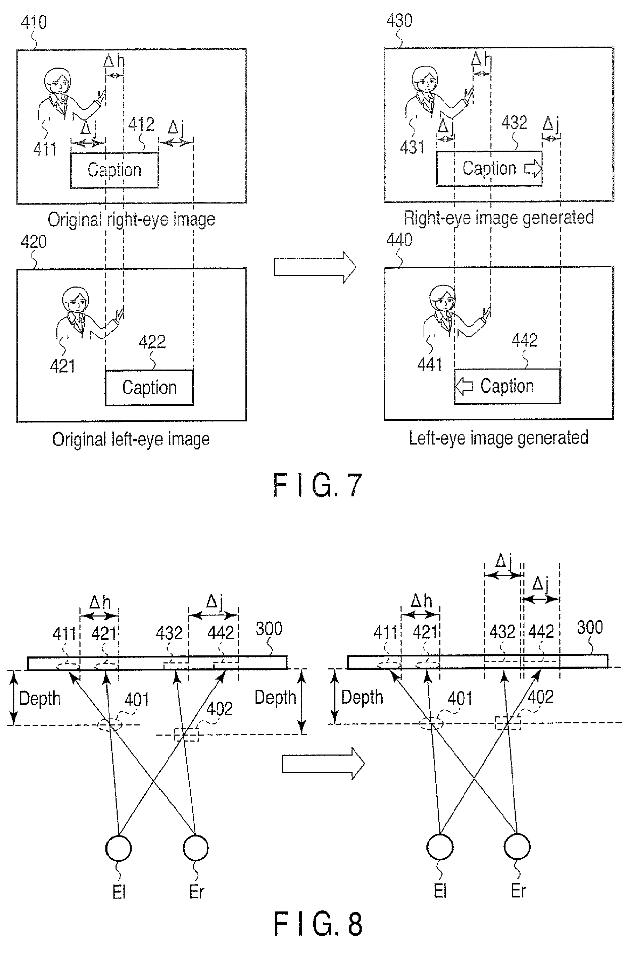

In order to adjust the depth of the captions contained, respectively in the right-eye image 410 and left-eye image 420 shown in FIG. 7, the control module 150 first detects the person's images 411 and 421 included in the images 410 and 420, respectively. The control module 150 then calculates parallax Δh on the basis of objects 411 and 421 detected. Further, the control module 150 calculates parallax Δj for the caption 412 included in the image

To adjust the depth of the captions to that of the person's images, the control module 150 controls the video processing module 131 and the expansion processing unit 132, causing them to generate such right-eye image 430 and left-eye image 440 as shown in FIG. 7.

That is, the control unit 150 expands the images of those parts of the left-eye image and right-eye image, which include the caption, thereby making the parallax Δj between the captions 432 and 443 existing, respectively, in the right-eye image 430 and left-eye image 440, equal to the parallax Δh between objects 440 and 441 existing, respectively, in the right-eye image 430 and left-eye image 440.

If parallax Δj is larger than parallax Δh, the control module 150 controls the expansion processing unit 132, causing the same to expand, toward the right, the right end of that part of the right-eye image 410, which includes the caption 412. If parallax Δj is also larger than parallax Δh, the control module 150 controls the expansion processing unit 132, causing the same to expand, toward the left, the left end of that part of the left-eye image 420, which includes the caption 412.

If parallax Δj is smaller than parallax Δh, the control module 150 controls the expansion processing unit 132, causing the same to expand, toward the left, the left end of that part of the right-eye image 410, which includes the caption 412. If parallax Δj is also smaller than parallax Δh, the control module 150 controls the expansion processing unit 132, causing the same to expand, toward the right, the right end of that part of the left-eye image 420, which includes the caption 412.

Performing the processing described above, the control module 150 can control the expansion processing unit 132, causing the unit 132 to make parallax Δj equal to parallax Δh (Δj=Δh). In this embodiment, the image part around the caption 412 included in the right-eye image 410, and the image part around the caption 442 included in the left-eye image 442 are expanded as described above. The depth of the caption can therefore be controlled, without much changing the position the caption assumes in the three-dimensional image the user is seeing.

The image processing apparatus 100 can display such a three-dimensional image of object 401 as shown in FIG. 8, at the point where the line connecting the user's right eye Er and object 411 in the right-eye image intersects with the line connecting the user's left eye El and object 421 in the left-eye image.

Further, the image processing apparatus 100 can display such a three-dimensional caption 402 as shown in FIG. 8, at the point where the line connecting the user's right eye Er and the caption 412 in the right-eye image intersects with the line connecting the user's left eye El and the caption 422 in the left-eye image.

In this case, the depth of object 402 may differ from the depth of the caption 402. If the difference between the depth of object 402 and the depth of the caption 402 is relatively large, the user will feel something strange with the three-three-dimensional image the display 300 displays.

In this case, the control module 150 controls the expansion processing unit 132 as described above, causing the unit 132 to expand that part of the right-eye image, which includes the caption 412, and that part of the left-eye image, which includes the caption 422, in accordance with the reference parallax between the caption 432 and caption 442 included in the right-eye image and left-eye image, respectively. Since the caption 432 in the right-eye image and the caption 442 in the left-eye image have parallax Δj that is equal to the reference parallax Δh, the apparatus 100 can make the user perceive the caption 402 at the same depth as the three-dimensional object 401.

As described above, the image processing apparatus 100 expands those parts of the left-eye image and right-eye image, which surround the identical captions included in these images, respectively, thereby making parallaxes Δh and Δj equal to each other. The image processing apparatus 100 can therefore display the three-dimensional object 401 and the three-dimensional caption 402 at the same depth. Moreover, if a plurality of objects exist in the image, the depth of the caption can be determined from the depth of any other object.

Thus, the image processing apparatus 100 displays the caption at a depth not so much different from the depth of any other object displayed in the same image. This prevents the user from feeling anything strange with the three-three-dimensional image displayed. As a result, the embodiment can provide an image processing apparatus, an image processing program and an image processing method, which are all convenient to the user.

The functions described in connection with each embodiment described above may be implemented by hardware. Alternatively, they may be implemented by software, i.e., programs that describe the functions and read into a computer incorporated in the image processing apparatus 100. Still alternatively, the functions may be implemented by both hardware and software. In this case, each function is implemented by either software or hardware.

For example, the caption detection module 155, image depth calculation module 156, caption controller 157, left/right image generation module 158 and caption depth calculation module 159 may be incorporated as hardware components, not in the control module 150, but in the signal processing module 113, video processing module 131 and/or OSD processing module 133.

In the embodiments described above, an object is detected from the video signal decoded by the video processing module 131, and the reference parallax is determined from the depth (parallax) of the object detected. The image processing apparatus 100 is not limited to this configuration. The reference parallax may be determined from the video signal, in any other process available.

The image processing apparatus 100 may be configured to perform, for example, edge detection on the video signal input to it, and to determine the reference parallax from the parallax of the edge detected. If so configured, the image processing apparatus 100 first calculates the parallax of an edge of the left-eye image and the parallax of associated edge of the right-eye image, and then determines the reference parallax from the parallaxes of edges calculated of the left-eye image and right-eye image, respectively. More precisely, the image processing apparatus 100 calculates a reference parallax that ranges from the minimum value for both the right-eye image and the left-eye image to the maximum values therefore. For example, the image processing apparatus 100 determines the reference parallax on the basis of the mean parallax calculated from the edges.

Further, the image processing apparatus 100 may be configured to limit the change of caption depth (parallax), which may occur while one scene is being displayed. The change of caption depth change may cause the user eyestrain, depending on how frequently it occurs. In view of this, the image processing apparatus 100 may detect each scene, may then limit the change of caption depth, and may finally determine the depth (parallax) of the caption. An image processing program and an image processing method, all capable of reducing the user's eyestrain, can thus be provided.

Furthermore, the image processing apparatus 100 may be configured to limit the chance of caption depth (parallax), which may between scenes. If the depth of the caption changes from one scene to the next scene, the user who keeps viewing the image may suffer from eyestrain. To prevent this from happening, the image processing apparatus 100 compares the depth of the caption in the scene with the depth of the caption in the next scene to display, and performs a control to change the depth smoothly. That is, the image processing apparatus 100 changes, for example, the depth of the caption to a value smaller or equal to a prescribed threshold value. An image processing program and an image processing method, all capable of reducing the user's eyestrain, can thus be provided.

The image processing apparatus 100 according to each embodiment is configured to adjust the depth of a caption, if any, contained in the video signal. Nonetheless, the image processing apparatus 100 is not limited to this configuration. It may be configured to adjust the depth only if the depth of the caption contained in the video signal is smaller than a preset lower limit or larger than a preset upper limit. In this case, there can be provided an image processing apparatus, an image processing program and an image processing method, all able to perform simple processes, increasing the user's convenience.

The image processing apparatus 100 according to each embodiment is configured to expand a prescribed part of the image, which includes a caption, thereby adjusting the parallax to the reference parallax. However, the image processing apparatus 100 is not limited to this configuration. It may be configured to contract the prescribed part of the image, which includes a caption, thereby to adjust the parallax to the reference parallax. In this case, the apparatus 100 fills the blank part resulting from the contraction of the prescribed part, with pixels that have been inferred from the pixels existing around the caption.

In the embodiments described above, the position of the caption displayed is adjusted in accordance with the reference parallax determined. The image processing apparatus 100 is not limited to this configuration, nevertheless. It may be configured to add the data representing the reference parallax to the content data, thereby to store the data representing the reference parallax. In this case, the video signal for which the caption depth has been adjusted can be reproduced by any other apparatus. As a result, an image processing apparatus, an image processing program and an image processing method, all convenient to the user, can be provided.

The control module 150 stores the content now containing the data representing the reference parallax. The control module 150 then writes the content to the memory card 165 connected to the card connector 164, to the USB device 167 connected to the USB connector 166 and to the optical disk M inserted in the disk drive 170. Further, the control module 150 writes the content via an interface to a storage device such as HDD, an SSD or a semiconductor memory. Still further, the control module 150 writes the content to any storage device that is connected to networks.

The various modules of the systems described herein can be implemented as software applications, hardware and/or software modules, or components on one or more computers, such as servers. While the various modules are illustrated separately, they may share some or all of the same underlying logic or code.

## Claims

1. An image processing apparatus **characterized by** comprising:
a receiver (101) configured to receive a content including a first image and a second image that have a parallax with respect to the first image;
a caption detection module (155) configured to detect a caption from the content received by the receiver;
a calculation module (156) configured to detect objects common to the first image and the second image and to calculate a parallax between the objects detected; and
a caption data output module (150) configured to output the parallax calculated by the calculation module, as reference parallax to control displaying of the caption detected by the caption detection module.

2. The image processing apparatus of claim 1, **characterized by** further comprising:
a caption controller (157) configured to decide positions at which to display the caption in the first image and second image of the content, respectively, on the basis of the reference parallax output by the caption data output module and the caption detected by the caption detection module, and configured to control the displaying of the content to display the caption at the decided positions in the first image and second image, respectively; and
a video output module (135) configured to output the content controlled by the caption controller.

3. The image processing apparatus of claim 2, **characterized in that** the caption controller controls the positions at which to display the caption, thereby to make the parallax of the first and second images of the content equal to the reference parallax.

4. The image processing apparatus of claim 2, **characterized in that** the caption controller generates a caption image from the caption data detected by the caption detection module, and control the displaying of the content to display the caption image at the decided positions in the first image and second image, respectively.

5. The image processing apparatus of claim 2, **characterized in that** the caption controller expands prescribed parts of the first and second images which include the captions, based on the parallax of the first and second images and the reference parallax, if the detection module detects captions embedded in the first and second images, respectively.

6. The image processing apparatus of claim 1, **characterized in that** the calculation module detects at least one person's image that is objects common to the first image and the second image, from the first and second images of the content, and to calculate the reference parallax ranging from a minimum value to a maximum value, both set for the detected person's images in the first image and second image.

7. The image processing apparatus of claim 6, **characterized in that** the calculation module detects at least one person's image that is objects common to the first image and the second image, from the first and second images of the content, and to calculate the reference parallax for designating positions at which to display the caption detected by the caption detection module, on the basis of the parallax of the first and second images detected.

8. The image processing apparatus of claim 1, **characterized in that** the calculation module detects an edge of the first image of the content and an edge of the second image of the content, and calculates the reference parallax ranging from a minimum value to a maximum value, both set for the detected edges of the first and second images.

9. The image processing apparatus of claim 2, **characterized by** further comprising a display (300) configured to display the content the video output module has output.

10. A non-transitory computer readable medium having stored thereon a computer program which is executable by a computer, the computer program controlling the computer to execute functions of:
detecting a caption from a content received by the image processing apparatus and including a first image and a second image that have a parallax with respect to the first image;
detecting objects common to the first image and the second image from the content, and calculating a parallax between the objects detected; and
outputting the parallax calculated thus calculated, as reference parallax to control displaying of the caption detected.

11. An image processing method for use in an image processing apparatus, the method **characterized by** comprising:
causing the image processing apparatus to detect a caption from a content received by the image processing apparatus and including a first image and a second image that have a parallax with respect to the first image;
causing the image processing apparatus to detect objects common to the first image and the second image from the content, and to calculate a parallax between the objects detected; and
causing the image processing apparatus to output the parallax calculated thus calculated, as reference parallax to control displaying of the caption detected.
